# EUROPEAN PATENT APPLICATION

(11) **EP 4 496 033 A1**
(43) Date of publication of application: **22.01.2025**
(21) Application number: 22966685.4
(22) Date of filing: 28.11.2022
(51) Int. Cl.: H01M 4/58

(54) **POSITIVE ELECTRODE ACTIVE MATERIAL, PREPARATION METHOD, SECONDARY BATTERY AND ELECTRICAL DEVICE**

(71) Applicant: Contemporary Amperex Technology Co., Limited, Ningde, Fujian 352100 (CN)
(72) Inventor: WAN, Yuejuan, Ningde, Fujian 352100 (CN); ZHANG, Xinxin, Ningde, Fujian 352100 (CN); OUYANG, Chuying, Ningde, Fujian 352100 (CN); LAN, Jiadian, Ningde, Fujian 352100 (CN); WANG, Jixiang, Ningde, Fujian 352100 (CN)
(74) Representative: Ziebig Hengelhaupt Intellectual Property Attorneys Patentanwaltskanzlei PartGmbB
(86) International application number: PCT/CN2022/134626
(87) International publication number: WO 2024/113080

(57) **Abstract**

The present disclosure relates to a positive electrode active material, including a boron-doped Prussian blue analog; and the Prussian blue analog has a chemical formula of AaMbM'c(CN)₆·dH₂O, in which A includes at least one of an alkali metal cation, an alkaline earth metal cation, Zn²⁺, and Al³⁺, M and M' each independently includes at least one of Ni ion, Cu ion, Fe ion, Mn ion, Co ion, and Zn ion, and H₂O is coordination water, 0 < a ≤ 2, 0 < b ≤ 1, 0 < c ≤ 1, 0 ≤ d ≤ 2; and relates to a preparation method, a secondary battery, and an electrical device. The stability of the positive electrode active material is improved, and thus improving a cycle performance of the corresponding secondary battery; and the preparation method of the positive electrode active material is simple in operation, mild in reaction conditions, and convenient for industrial application.

## Description

### FIELD

The present application relates to the field of material technology, and more particularly, to a positive electrode active material, a preparation method, a secondary battery, and an electrical device.

### BACKGROUND

In recent years, with an application range of secondary batteries becoming more and more extensive, secondary batteries are widely used in energy storage power systems such as hydropower, firepower, wind power and solar power stations, as well as in a variety of fields such as electric tools, electric bicycles, electric motorcycles, electric vehicles, military equipment, aerospace, and so on. Due to a great development of secondary batteries, higher requirements have been put forward for their energy density, cycle performance, and safety performance.

A Prussian blue analog is a promising positive electrode active material for many next-generation metal ion batteries due to its excellent electrochemical performance. In preparation processes of the Prussian blue analog, as a positive electrode active material, borohydride will be used as a reducing reagent sometimes. The borohydride will react with water when heated at high temperature, releasing a large amount of hydrogen, and creating a greater security risks; moreover, a strong alkali generated by the reaction will react with the Prussian blue analog, causing part of metal elements therein to precipitate, and thus destroying a structural stability of the Prussian blue analog, resulting in a significant decrease in its electrical performance. Therefore, the existing Prussian blue analog still needs to be improved.

### SUMMARY

The present disclosure is made in view of the foregoing subject matter, and its purpose is to provide a positive electrode active material including a boron-doped Prussian blue analog, which improves a stability of the positive electrode active material, and thus improving a cycle performance of a corresponding secondary battery; and a preparation method of the positive electrode active material is simple in operation, mild in reaction conditions, and convenient for industrial application .

In order to achieve the above objectives, the present disclosure provides a positive electrode active material, a preparation method, a secondary battery, and an electrical device.

A first aspect of the present disclosure provides a positive electrode active material, including a boron-doped Prussian blue analog; and the Prussian blue analog has a chemical formula of AₐM_{b}M'_{c}(CN)₆·dH₂O, in which A includes at least one of an alkali metal cation, an alkaline earth metal cation, Zn²⁺, and Al³⁺, M and M' each independently includes at least one of Ni ion, Cu ion, Fe ion, Mn ion, Co ion, and Zn ion, and H₂O is coordination water, 0 < a ≤ 2, 0 < b ≤ 1, 0 < c ≤ 1, 0 ≤ d ≤ 2.

The positive electrode active material of the present disclosure improves the stability of the positive electrode active material, and thus improving the cycle performance of the corresponding secondary battery by including a boron-doped Prussian blue analog, in which carbon element in the Prussian blue analog is replaced with boron element, causing electrons in a boron-nitrogen bond to be localized to nitrogen element, which results in an increase in surface charge of the nitrogen element, and an increase in a degree of orbital overlap, a decrease in length, and an increase in a covalency of a M-nitrogen chemical bond.

In any embodiment, a content of the boron element is 0.001%-20%, optionally 2%-15.5%, based on a weight of the positive electrode active material. Therefore, by limiting the content of the boron element, the stability of the positive electrode active material is further improved, and thus the cycle performance of the corresponding secondary battery is improved.

In any embodiment, a molar ratio of boron element to M element is (0.001-2):1, optionally (0.1-0.8): 1 in the positive electrode active material. Therefore, by limiting the molar ratio of boron element to M element, the stability of the positive electrode active material is further improved, and thus the cycle performance of the corresponding secondary battery is improved.

In any embodiment, a weight ratio of boron element to carbon element is (0.001-800):1, optionally (0.1-8):1 in the positive electrode active material. Therefore, by limiting the weight ratio of boron element to carbon element, the stability of the positive electrode active material is further improved, and thus the cycle performance of the corresponding secondary battery is improved.

In any embodiment, A includes at least one of sodium ion, magnesium ion, and potassium ion in the positive electrode active material. Therefore, the stability of the positive electrode active material is further improved, and thus the cycle performance of the corresponding secondary battery is improved.

In any embodiment, the positive electrode active material satisfies at least one of the following characteristics:
a specific surface area is 2 m²/g to 5 m²/g, optionally 3 m²/g to 4 m²/g; and
an average volume particle diameter Dᵥ₅₀ is 1.5µm to 5µm, optionally 2µm to 3.5µm.

Therefore, the stability of the positive electrode active material is further improved, and thus the cycle performance of the corresponding secondary battery is improved.

A second aspect of the present disclosure provides a preparation method of a positive electrode active material, including:
(1) adding a Prussian blue analog into a mixed solvent to obtain a solution containing the Prussian blue analog;
(2) adding a boron-containing compound into the solution containing the Prussian blue analog, and mixing to obtain a mixture;
(3) filtering and drying the mixture to obtain a positive active material;
in which the positive electrode active material includes a boron-doped Prussian blue analog; the Prussian blue analog has a chemical formula of AₐM_{b}M'_{c}(CN)₆·dH₂O, A including at least one of an alkali metal cation, an alkaline earth metal cation, Zn²⁺, and Al³⁺, M and M' each independently including at least one of Ni ion, Cu ion, Fe ion, Mn ion, Co ion, and Zn ion, and H₂O being coordination water, 0 < a ≤ 2, 0 < b ≤ 1, 0 < c ≤ 1, 0 ≤ d ≤ 2.

Therefore, the preparation method is simple in operation, mild in reaction conditions, and convenient for industrial application; the boron-containing compound used may reduce oxidized high valence metal ions (such as M or M') in the Prussian blue analog, avoiding a loss of A ion, and thus improving the stability of the positive electrode active material.

In any embodiment, in step (1), the mixed solvent is a mixture of water and an organic solvent miscible with water. Therefore, the stability of the positive electrode active material prepared is further improved.

In any embodiment, a volume ratio of the water to the organic solvent is (0.001-3): 1. Therefore, the stability of the positive electrode active material prepared is further improved.

In any embodiment, in step (2), the boron-containing compound has a formula of Q(BH₄)ₓ, in which Q is an alkali metal ion, an alkaline earth metal ion, an aluminum ion, and a zinc ion, and x is a valence state of Q. Therefore, the stability of the positive electrode active material prepared is further improved.

In any embodiment, in step (2), a molar ratio of the boron-containing compound to the Prussian blue analog is (0.5-2): 1, optionally (0.5-1): 1. Therefore, the stability of the positive electrode active material prepared is further improved.

In any embodiment, in step (2), a temperature of the mixing is -10°C to 30°C, optionally 0°C to 25°C; and a time of the mixing is 0 to 2 hours, optionally 0.5 to 1.5 hours. Therefore, the stability of the positive electrode active material prepared is further improved.

A third aspect of the present disclosure provides a secondary battery, which is characterized by including the positive electrode active material according to the first aspect of the present disclosure or the positive electrode active material prepared by the method according to the second aspect of the present disclosure. Therefore, the secondary battery has excellent cycle performance.

In any embodiment, the secondary battery is a sodium ion secondary battery.

A fourth aspect of the present disclosure provides an electrical device, including the secondary battery according to any one of claims 13 to 14.

The positive electrode active material of the present disclosure improves the stability of the positive electrode active material, and thus improving the cycle performance of the corresponding secondary battery by including a boron-doped Prussian blue analog; and the preparation method is simple in operation, mild in reaction conditions, and convenient for industrial application.

### BRIEF DESCRIPTION OF THE DRAWINGS

FIG. 1 is a comparison of a cycle stability between a battery of Example 1 and a battery of Comparative Example 1 according to the present disclosure; in which black curve represents Example 1, and gray curve represents Comparative Example 1;
FIG. 2 is a schematic diagram of a secondary battery according to an embodiment of the present disclosure;
FIG. 3 is an exploded view of a secondary battery according to an embodiment of the present disclosure shown in FIG. 1;
FIG. 4 is a schematic diagram of an electrical device using a secondary battery as a power source according to an embodiment of the present disclosure.

Description of reference numerals:
5, secondary battery; 51, housing; 52, electrode assembly; 53, cover plate; and 6, electrical device.

### DETAILED DESCRIPTION

Embodiments of a positive electrode active material and a preparation method thereof, a secondary battery, and an electrical device of the present disclosure are described in detail below with appropriate reference to the detailed description of the accompanying drawings. However, unnecessary detailed description may be omitted. For example, there is a case of omitting a detailed description of well-known items and a repeated description of an actually same structure. This is to avoid unnecessarily lengthy of the following description, thereby helping those skilled in the art to understand. In addition, the accompany drawings and the following description are provided to make those skilled in the art to fully understand the present disclosure, which are not intended to limit the subject matters recited in the claims.

The "range" disclosed in the present disclosure is defined by a lower limit and an upper limit, and a given range is defined by selecting a lower limit and an upper limit, while the selected lower limit and upper limit define the boundaries of a particular range. A range defined in such a manner may include or not include the end values, which may be arbitrarily combined. That is, any lower limit may be combined with any upper limit to form a range. For example, if ranges of 60 to 120 and 80 to 110 are specified for a particular parameter, it can be understood that ranges of 60 to 110 and 80 to 120 are also expected. Further, if the minimum range values 1 and 2 are listed and the maximum range values 3, 4, and 5 are listed, all the following ranges may be expected: 1 to 3, 1 to 4, 1 to 5, 2 to 3, 2 to 4, and 2 to 5. In the present disclosure, unless otherwise stated, a numerical range of "a to b" means an abbreviated representation of a combination of any real numbers between a and b, where a and b are both real numbers. For example, a numerical range "0 to 5" means that all real numbers between 0 and 5 are all listed herein, and "0 to 5" is merely an abbreviated representation of combinations of these numbers. In addition, when it is recited that a certain parameter is an integer which is more than or equal to 2, it is equivalent to disclosing that the parameter is, for example, an integer of 2, 3, 4, 5, 6, 7, 8, 9, 10, 11, or 12, etc.

All the embodiments and optional embodiments of the present disclosure may be combined with each other to form a new technical solution, unless otherwise stated.

All the technical features and optional technical features of the present disclosure may be combined with each other to form a new technical solution, unless otherwise stated.

All the steps of the present disclosure may be performed sequentially or may be performed randomly, and preferably sequentially, unless otherwise stated. For example, the method includes steps (a) and (b), and this indicates that the method may include steps (a) and (b) performed sequentially or may include steps (b) and (a) performed sequentially. For example, when it is mentioned that the method may further include a step (c), it indicates that the step (c) may be added to the method in any order, for example, the method may include steps (a), (b), and (c), and it may also include steps (a), (c), and (b) or may include steps (c), (a), and (b).

The phrase "include" and "comprise" mentioned in the present disclosure represent an open type or may be a closed type, unless otherwise stated. For example, the phrase "include" and "comprise" may indicate that other unlisted components can be further included or comprised, or only listed components are included or comprised.

In the present disclosure, unless otherwise stated, the term "or" is inclusive. For example, the phrase "A or B" means "A, B, or both A and B". More specifically, any of following conditions satisfies the condition "A or B": A is true (or present) and B is false (or not present); A is false (or not present) and B is true (or present); or both A and B are true (or present).

A Prussian blue analog is a promising positive electrode active material for many next-generation metal ion batteries due to its excellent electrochemical performance. In a preparation process of the Prussian blue analog, as a positive electrode active material, borohydride will be used as a reducing reagent. The borohydride will react with water when heated at high temperature, releasing a large amount of hydrogen, and creating a greater security risks; moreover, a strong alkali generated by the reaction will react with the Prussian blue analog, causing part of metal elements therein to precipitate, and thus destroying a structural stability of the Prussian blue analog, resulting in a significant decrease in its electrical performance. Therefore, the existing Prussian blue analog still needs to be improved. After extensive research, the inventors found that using a boron-doped Prussian blue analog as a positive electrode active material can improve the stability of the positive electrode active material, and thus improving the cycle performance of the corresponding secondary battery; and a preparation method of the Prussian blue analog is simple in operation, mild in reaction conditions, and convenient for industrial application.

### Positive electrode active material

In some embodiments, a first aspect of the present disclosure provides a positive electrode active material, which includes a boron-doped Prussian blue analog; and the Prussian blue analog has a chemical formula of AₐM_{b}M'_{c}(CN)₆·dH₂O, in which A includes at least one of an alkali metal cation, an alkaline earth metal cation, Zn²⁺, and Al³⁺, M and M' each independently includes at least one of Ni ion, Cu ion, Fe ion, Mn ion, Co ion, and Zn ion, and H₂O is coordination water, 0 < a ≤ 2, 0 < b ≤ 1, 0 < c ≤ 1,0 ≤ d ≤ 2.

The positive electrode active material of the present disclosure improves the stability of the positive electrode active material, and thus improving the cycle performance of the corresponding secondary battery by including a boron-doped Prussian blue analog, in which carbon element in the Prussian blue analog is replaced with boron element, causing electrons in a boron-nitrogen bond to be localized to a nitrogen element, which results in an increase in surface charge of the nitrogen element, and an increase in a degree of orbital overlap, a decrease in length, and an increase in a covalency of a M-nitrogen chemical bond.

In some embodiments, the "boron" generally refers to boron (B) element. The "doping" means that B element may be attached to a surface of the Prussian analog, and may enter into the interior of the structure of the Prussian analog, for example, be doped into a bulk structure of the Prussian analog.

In some embodiments, a content of the boron element is 0.001%-20%, optionally 2%-15.5%, and further optionally 3.0%-7.5%, based on a weight of the positive electrode active material. Therefore, by limiting the content of the boron element, the stability of the positive electrode active material is further improved, and thus the cycle performance of the corresponding secondary battery is improved.

In the present disclosure, unless otherwise specified, the content of each element mentioned refers to its percentage by weight of each element in the positive electrode active material, measured according to inductively coupled plasma emission spectrometry.

In some embodiments, a molar ratio of boron element to M element is (0.001-2):1, optionally (0.1-0.8): 1, and further optionally (0.4-0.6:1) in the positive electrode active material, which is measured according to inductively coupled plasma emission spectrometry. Therefore, by limiting the molar ratio of the boron element to M element, the stability of the positive electrode active material is further improved, and thus the cycle performance of the corresponding secondary battery is improved.

In some embodiments, a weight ratio of boron element to carbon element is (0.001-800):1, optionally (0.1-8):1, optionally (0.1-0.9):1, and further optionally (0.7-0.9):1 in the positive electrode active material. Therefore, by limiting the weight ratio of boron element to carbon element, the stability of the positive electrode active material is further improved, and thus the cycle performance of the corresponding secondary battery is improved.

In some embodiments, in the positive electrode active material, a content of carbon element is 2%-23%, optionally 5%-21%, and further optionally 10%-14%, based on a weight of the positive electrode active material.

In some embodiments, in the positive electrode active material, a content of nitrogen element is 26%-27%, based on a weight of the positive electrode active material.

In some embodiments, A includes at least one of sodium ion, magnesium ion, and potassium ion, optionally sodium ion or potassium ion in the positive electrode active material. Therefore, the stability of the positive electrode active material is further improved, and thus the cycle performance of the corresponding secondary battery is improved. In some embodiments, in the positive electrode active material, M includes at least one of Fe and Mn; and M' includes at least one of Fe and Mn. M and M' may be the same or different, preferably the same.

In some embodiments, in the positive electrode active material, the Prussian blue analog includes at least one of Na₂NiFe(CN)₆, Na₂ZnFe(CN)₆, Na₂CoFe(CN)₆, Na₂FeFe(CN)₆, Na₂MnFe(CN)₆, K₂NiFe(CN)₆, K₂ZnFe(CN)₆, K₂CoFe(CN)₆, K₂FeFe(CN)₆, K₂MnFe(CN)₆, Li₂NiFe(CN)₆, Li₂ZnFe(CN)₆, Li₂CoFe(CN)₆, Li₂FeFe(CN)₆, Li₂MnFe(CN)₆, optionally includes at least one of Na₂FeFe(CN)₆, K₂FeFe(CN)₆, and Li₂FeFe(CN)₆.

In some embodiments, the positive electrode active material satisfies at least one of the following characteristics:
a specific surface area is 2 m²/g to 5 m²/g, optionally 3 m²/g to 4 m²/g; and
an average volume particle diameter Dᵥ₅₀ is 1.5µm to 5µm, optionally 2µm to 3.5µm.

Therefore, the stability of the positive electrode active material is further improved, and thus the cycle performance of the corresponding secondary battery is improved.

In the present disclosure, the term "average volume particle diameter Dᵥ₅₀" has a well-known meaning in the art, and may be measured using instruments and methods known in the art. For example, it may be measured, using a laser particle size analyzer (such as Master Size 3000) with reference to GB/T 19077-2016 particle size distribution laser diffraction method.

A second aspect of the present disclosure provides a preparation method of a positive electrode active material, including:
(1) adding a Prussian blue analog into a mixed solvent to obtain a solution containing the Prussian blue analog;
(2) adding a boron-containing compound into the solution containing the Prussian blue analog, and mixing to obtain a mixture;
(3) filtering and drying the mixture to obtain a positive active material;
in which the positive electrode active material includes a boron-doped Prussian blue analog; and the Prussian blue analog has a chemical formula of AₐM_{b}M'_{c}(CN)₆·dH₂O, A including at least one of an alkali metal cation, an alkaline earth metal cation, Zn²⁺, and Al³⁺, M and M' each independently including at least one of Ni ion, Cu ion, Fe ion, Mn ion, Co ion, and Zn ion, and H₂O being coordination water, 0 < a ≤ 2, 0 < b ≤ 1, 0 < c ≤ 1, 0 ≤ d ≤ 2.

Therefore, the preparation method is simple in operation, mild in reaction conditions, and convenient for industrial application; the boron-containing compound used may reduce oxidized high valence metal ions (such as M or M') in the Prussian blue analog, avoiding a loss of A ion, and thus improving the stability of the positive electrode active material.

The Prussian blue analog is applicable to the above-mentioned technical features of the first aspect of the present disclosure with respect to the Prussian blue analog and the compositions thereof. Likewise, the positive electrode active material is applicable to the above-mentioned technical features with respect to the positive electrode active material.

In some embodiments, in step (1), the mixed solvent is a mixture of water and an organic solvent miscible with water. Therefore, the stability of the positive electrode active material prepared is further improved.

In some embodiments, the organic solvent is generally any compound miscible with water known to those skilled in the art, including, but not limited to, at least one of methanol, ethanol, acetonitrile, ethylene glycol, acetone, ethyl ether, tetrahydrofuran, methyltetrahydrofuran, pyridine, 1,4-dioxane, N-methyl pyrrolidone, and N,N-dimethylformamide, and optionally including at least one of ethanol, methanol, tetrahydrofuran, and methyltetrahydrofuran, further optionally ethanol, methanol, or a combination thereof.

In some embodiments, a volume ratio of the water to the organic solvent is (0.001-3): 1. Therefore, the stability of the positive electrode active material prepared is further improved.

In some embodiments, in step (2), the boron-containing compound has a formula of Q(BH₄)ₓ, in which Q includes at least one of an alkali metal ion, an alkaline earth metal ion, an aluminum ion, and a zinc ion, optionally includes at least one of alkali metal ions and alkaline earth metal ions, and x is a valence state of Q. Therefore, the stability of the positive electrode active material prepared is further improved.

In some embodiments, Q ion in the boron-containing compound is the same as the A ion in the Prussian blue analog. For example, in the case that the Prussian blue analog has the chemical formula of NaₐM_{b}M'_{c}(CN)₆·dH₂O (where a, M, b, M', c, and d have the above definitions), the boron-containing compound used is sodium borohydride. Therefore, the doping of unnecessary metal ions into the positive electrode active material or the secondary battery may be further reduced.

In some embodiments, the boron-containing compound includes at least one of NaBH₄, KBH₄, Al(BH₄)₃, Ca(BH₄)₂, and Mg(BH₄)₂, optionally NaBH₄, KBH₄, or a combination thereof.

In some embodiments, in step (2), a molar ratio of the boron-containing compound to the Prussian blue analog is (0.5-2): 1, optionally (0.5-1): 1. Therefore, the stability of the prepared positive electrode active material is further improved.

In some embodiments, in step (2), a temperature of the mixing is -10°C to 30°C, optionally 0°C to 25°C; and a time of the mixing is 0 to 2 hours, optionally 0.5 to 1.5 hours. Therefore, the stability of the prepared positive electrode active material is further improved.

A third aspect of the present disclosure provides a secondary battery, including the positive electrode active material according to the first aspect of the present disclosure or the positive electrode active material prepared by the method according to the second aspect of the present disclosure. Therefore, the secondary battery has excellent cycle performance.

In some embodiments, the secondary battery is a metal ion secondary battery including, but not limited to, at least one of a sodium ion battery, a lithium ion battery, a potassium ion battery, a magnesium ion battery, an aluminum ion battery, and a zinc ion battery.

In some preferred embodiments, the secondary battery is a sodium ion secondary battery or a potassium ion secondary battery, optionally a sodium ion secondary battery.

A fourth aspect of the present disclosure provides an electrical device, including the secondary battery according to the third aspect of the present disclosure.

The secondary battery and electrical device of the present disclosure will be described below with appropriate reference to the drawings.

Unless otherwise specified, the assemblies, material types, or contents of the batteries mentioned are applicable to all ion batteries at the same time.

In one embodiment of the present disclosure, a secondary battery is provided.

Generally, the secondary battery includes a positive electrode sheet, a negative electrode sheet, an electrolyte, and a separator. During charging and discharging of the battery, active ions are intercalated and deintercalated between the positive electrode sheet and the negative electrode sheet. The electrolyte serves to conduct active ions between the positive electrode sheet and the negative electrode sheet. The separator is arranged between the positive electrode sheet and the negative electrode sheet, and mainly serves to prevent short circuit between the positive and negative electrode, and at the same time, it can enable the ions to pass through.

### Positive electrode sheet

The positive electrode sheet includes a positive electrode current collector and a positive electrode film layer disposed on at least one surface of the positive electrode current collector, the positive electrode film layer including a positive electrode active material of the first aspect of the present disclosure.

As an example, the positive electrode current collector has two surfaces opposed to each other in its own thickness direction. The positive electrode film layer is arranged on either or both of the two surfaces opposed to the positive electrode current collector.

In some embodiments, the positive electrode current collector may be a metal foil or a composite current collector. For example, as the metal foil, a copper foil may be used. The composite current collector may include a polymer material base layer and a metal layer formed on at least one surface of the polymer material substrate. The composite current collector may be formed by forming a metallic material on a substrate of a polymer material substrate. Wherein, the metallic material includes, but is not limited to, aluminum, aluminum alloy, nickel, nickel alloy, titanium, titanium alloy, silver, and silver alloy, etc. The substrate of the polymer material includes a substrate of polypropylene (PP), polyethylene terephthalate (PET), polybutylene terephthalate (PBT), polystyrene (PS), and polyethylene (PE), etc.

In some embodiments, the positive electrode active material may include a positive electrode active material known in the art for batteries.

In some embodiments, the positive electrode film layer may further optionally include a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin. A weight ratio of the binder in the positive electrode film layer is 0-20 wt%, based on the total weight of the positive electrode film layer.

In some embodiments, the positive electrode film layer further optionally includes other conductive agent. As an example, the conductive agent may include at least one of superconducting carbon, carbon black (such as acetylene black or Ketjen black), carbon dots, carbon nanotubes, graphene and carbon nanofibers. A weight ratio of the conductive agent in the positive electrode film layer is 0-20 wt%, based on the total weight of the positive electrode film layer.

In some embodiments, the positive electrode sheet can be prepared by dispersing the above-mentioned components for preparing a positive electrode sheet, such as a positive electrode active material, a conductive agent, a binder and any other components, in a solvent (such as N-methyl pyrrolidone) to form a positive electrode slurry, in which a solid content of the positive electrode slurry is 40-80wt%, and the viscosity at room temperature is adjusted to 5000-250000mPa·s; coating the positive electrode slurry on the surface of the positive electrode current collector; and after drying and cold pressing by the cold-rolling mill to form the positive electrode sheet. The compacted density of the positive electrode sheet is 2.0 to 3.6 g/cm³, optionally 2.3 to 3.5 g/cm³.

### Negative electrode sheet

The negative electrode sheet includes a negative electrode current collector and a negative electrode film layer disposed on at least one surface of the negative electrode current collector, the negative electrode film layer includes a negative electrode active material.

As an example, the negative electrode current collector has two surfaces opposed to each other in its own thickness direction. The negative electrode film layer is arranged on either or both of the two surfaces opposed to each other of the negative electrode current collector.

In some embodiments, the negative current collector may be a metal foil or a composite current collector. For example, as the metal foil, a copper foil may be used. The composite current collector may include a polymer material base layer and a metal layer formed on at least one surface of the polymer material substrate. The composite current collector may be formed by forming a metallic material on a substrate of a polymer material. The metallic material includes, but is not limited to, copper, copper alloys, nickel, nickel alloy, titanium, titanium alloy, silver, and silver alloy, etc. The substrate of the polymer material includes, but is not limited to, a substrate of polypropylene (PP), polyethylene terephthalate (PET), polybutylene terephthalate (PBT), polystyrene (PS), and polyethylene (PE), etc. The thickness of the negative current collector is usually 3µm to 5µm.

In some embodiments, the negative electrode active material of the secondary battery can be a negative electrode active material known in the art for batteries. As an example, the negative electrode active material may include at least one of the following materials: artificial graphite, natural graphite, acetylene black, mesocarbon microbeads (MCMB), soft carbon, hard carbon, silicon-based materials, tin-based materials, and lithium titanate, etc. The silicon-based material may be selected from at least one of elemental silicon, silicon-oxygen compounds, silicon-carbon complexes, silicon-nitrogen complexes, and silicon alloys. The tin-based material may be selected from at least one of elemental tin, tin oxide compounds, and tin alloys. However, the present disclosure is not limited to these materials, and other conventional materials that can be used as a negative electrode active material for a battery can also be used. These negative electrode active materials may be used alone or in combination of two or more.

The weight ratio of the negative electrode active material in the negative electrode film layer is 70-100 wt%, based on the total weight of the negative electrode film layer.

In some embodiments, the negative electrode film layer may further optionally include a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethylmethacrylic acid (PMAA), and carboxymethyl chitosan (CMCS). The weight ratio of the binder in the negative electrode film layer is 0-30 wt%, based on the total weight of the negative electrode film layer.

In some embodiments, the negative electrode film layer further optionally includes other conductive agent. The conductive agent may be selected from at least one of superconducting carbon, carbon black (such as acetylene black or Ketjen black), carbon dots, carbon nanotubes, graphene, and carbon nanofibers. The weight ratio of the conductive agent in the negative electrode film layer is 0-20 wt%, based on the total weight of the negative electrode film layer.

In some embodiments, the negative electrode film layer may optionally include other additives, such as thickeners (such as sodium carboxymethylcellulose (CMC-Na)) and the like. The weight ratio of the other additives in the negative electrode film layer is 0 to 15 wt%, based on the total weight of the negative electrode film layer.

In some embodiments, the negative electrode sheet can be prepared in the following manner: dispersing the above-mentioned components used for preparing the negative electrode sheet, such as the negative electrode active material, the conductive agent, the binder and any other components in a solvent (such as deionized water) to form a negative electrode slurry, in which a solid content of the negative electrode slurry is 30-70wt%, and the viscosity at room temperature is adjusted to 2000-10000mPa·s; coating the obtained negative electrode slurry on the negative electrode current collector; and obtaining an negative electrode sheet after drying and cold pressing such as roll pressing. The compacted density of the negative electrode sheet is 1.2 to 2.0 g/cm³.

### Electrolyte

The electrolyte serves to conduct ions between the positive electrode sheet and the negative electrode sheet. The type of the electrolyte is not specifically limited in the present disclosure, and can be selected according to requirements. For example, the electrolyte can be liquid, gel, or all-solid.

In some embodiments, the electrolyte employs an electrolyte solution. The electrolyte solution includes an electrolyte salt and a solvent.

In some embodiments, the electrolyte salt of the lithium ion battery may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulphonimide) (LiTFSI), lithium trifluoromethanesulphonate (LiTFS), lithium difluorooxalate borate ( LiDFOB), Lithium borate dioxalate (LiBOB), lithium difluorophosphate (LiPO₂F₂), lithium difluorodioxalate phosphate (LiDFOP), and lithium tetrafluoroxalate phosphate (LiTFOP). The concentration of the electrolyte salt is typically 0.5 to 5 mol/L.

The electrolyte salt of the sodium ion battery may be selected from one or more of sodium hexafluorophosphate, sodium bis(fluorosulfonyl)imide, sodium bis(trifluoromethanesulfonyl)imide, sodium trifluoromethanesulfonate, sodium tetrafluoroborate, sodium difluorophosphate, sodium perchlorate, and sodium chloride.

The electrolyte salt used in other metal ion batteries is basically compatible with the electrolyte salt used in the above-mentioned lithium ion or sodium ion batteries. It is only to replace the original cations with the corresponding metal cations.

In some embodiments, the solvent may be selected from one or more of fluoroethylene carbonate (FEC), ethylene carbonate (EC), propylene carbonate (PC), ethyl methyl carbonate (EMC), diethyl carbonate (DEC) ), dimethyl carbonate (DMC), dipropyl carbonate (DPC), methylpropyl carbonate (MPC), ethylpropyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB) , ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolyte solution further optionally includes an additive. For example, the additive may include a negative electrode film-forming additive, a positive electrode film-forming additive, and may further include an additive capable of improving certain properties of the battery, for example, an additive for improving overcharge properties of the battery, an additive for improving high-temperature or low-temperature properties of the battery, etc.

### Separator

In some embodiments, the secondary battery may include a separator. The type of the separator is not particular limited in the present disclosure. Any known porous structure separator having good chemical stability and mechanical stability may be selected.

In some embodiments, the material of the separator may be selected from at least one of glass fiber, non-woven fabric, polyethylene, polypropylene, and polyvinylidene fluoride. The separator may be a single-layer film or a multi-layer composite film, without particular limitation. When the separator is a multilayer composite film, the materials of each layer may be the same or different, without particular limitation.

In some embodiments, the thickness of the separator is 6 to 40µm, optionally 12 to 20µm.

In some embodiments, the electrode assembly may be made with the positive electrode sheet, the negative electrode sheet, and the separator by a winding process or a lamination process.

In some embodiments, the secondary battery may include an outer package. The outer package may be used to encapsulate the electrode assembly and the electrolyte.

In some embodiments, the outer package of the secondary battery may be a hard case such as a hard plastic case, an aluminum case, a steel case, and the like. The outer package of the secondary battery may also be a soft package, such as a pouch-type package. The material of the soft package may be plastic, as plastic, polypropylene, polybutylene terephthalate, polybutylene succinate, etc may be listed.

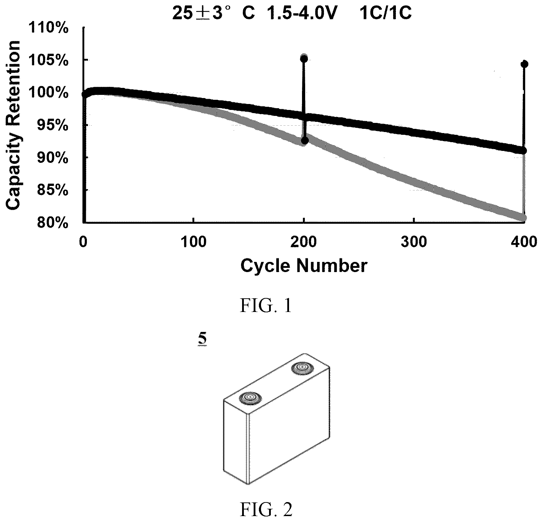

The shape of the secondary battery is not particularly limited in the present disclosure, and may be cylindrical, square or any other shape. For example, FIG. 2 is a secondary battery 5 having a square structure as one example.

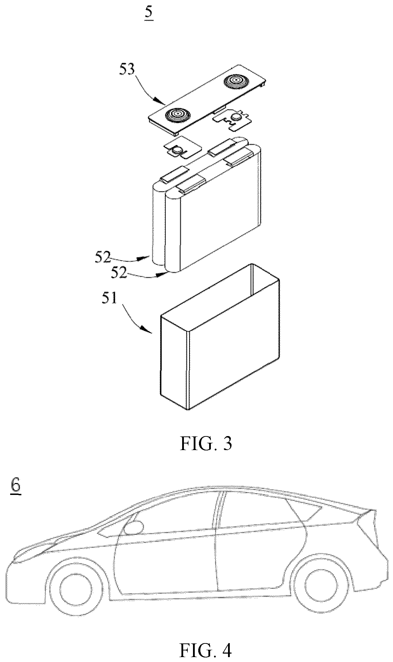

In some embodiments, referring to FIG.3, the outer package may include a housing 51 and a cover plate 53. The housing 51 may include a bottom plate and a side plate connected to the bottom plate, and the bottom plate and the side plate are enclosed to form a receiving cavity. The housing 51 has an opening communicating with the receiving cavity. The cover plate 53 may be covered on the opening to enclose the receiving cavity. The positive electrode sheet, the negative electrode sheet, and the separator may be formed the electrode assembly 52 by a winding process or a lamination process. An electrode assembly 52 is encapsulated within the receiving cavity. The electrolyte solution is infiltrated into the electrode assembly 52. The number of the electrode assemblies 52 contained in the secondary battery 5 may be one or more, and can be chose according to specific actual requirements for those skilled in the art.

In some embodiments, the secondary batteries may be assembled into a battery module. The number of secondary batteries contained in the battery module may be one or more. The specific number may be selected by those skilled in the art according to the application and capacity of the battery module.

In the battery module, a plurality of secondary batteries 5 may be sequentially arranged along the length direction of the battery module. Of course, it may be arranged in any other manner. The plurality of secondary batteries 5 may further be fixed by fasteners.

Optionally, the battery module may further include a housing having an accommodating space in which the plurality of secondary batteries 5 are accommodated.

In some embodiments, the above-mentioned battery modules may also be assembled into a battery pack. The number of battery modules contained in the battery pack may be one or more. The specific number may be selected by those skilled in the art according to the application and capacity of the battery pack.

The battery pack may include a battery box and a plurality of battery modules arranged in the battery box. The battery box includes an upper box body and a lower box body. The upper box body can cover the lower box body and forms an enclosed space for accommodating the battery module. The plurality of battery modules may be arranged in the battery box in an arbitrary manner.

In addition, the present disclosure further provides an electrical device including at least one of a secondary battery, a battery module, and a battery pack provided in the present disclosure. The secondary battery, the battery module, or the battery pack can be used as a power supply of the electrical device and can also be used as an energy storage unit of the electrical device. The electrical device may include a mobile device (such as a mobile phone, a notebook computer, etc.), an electric vehicle (such as a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, etc., but it is not limited thereto.

As the electrical device, the secondary battery, the battery module, or the battery pack can be selected according to its use requirements.

FIG. 4 is an example of an electrical device. The electrical device may be a pure electric vehicle, a hybrid electric vehicle, or a plug-in hybrid electric vehicle, etc. In order to meet the requirement of the electrical device for high power and high energy density of the secondary battery, the battery pack or the battery module can be used.

The device as another example may be a cell phone, a tablet, a laptop, and the like. The device is typically required to be lightweight and thin, and may employ a secondary battery as a power source.

### [Examples]

In order to make the technical problems solved, technical solutions and beneficial effects of the present disclosure more clear, further detailed description will be given below in conjunction with the examples and accompanying drawings. Apparently, the described examples are only a part of the examples of the present disclosure, not all of them. The following description of at least one exemplary example is merely illustrative in nature and in no way serves as any limitation on the present disclosure and its application. Based on the examples in this present disclosure, all other examples obtained by persons of ordinary skill in the art without making creative efforts fall within the scope of protection of this disclosure.

Specific techniques or conditions, which are not specified in the examples, are carried out in accordance with techniques or conditions described in literature in the art or in accordance with product specification. The reagents or instruments used without specifying manufacturers are all conventional products which are commercially available.

### I. Preparation of the positive electrode active material

### Preparation Example 1

1. Provision of a Prussian blue analog
   (1.1) Sodium ferrocyanide Na₄Fe(CN)₆·10H₂O (an aqueous solution with a concentration of 0.4mol/L), a cyanide of transition metal M', was mixed with FeSO₄, a compound containing transition metal M, according to a stoichiometric ratio of 1:1, then heated and stirred at 80°C for 5 hours to obtain a suspended aqueous solution of a Prussian blue analog; after lowered to room temperature, it was washed with deionized water for 3 times, and then filtered and dried to obtain a Prussian blue analog having a chemical formula of Na₂FeFe(CN)₆·2H₂O.
2. Preparation of positive electrode active material
   (2.1) 17.5g of the Prussian blue analog having the chemical formula of Na₂FeFe(CN)₆·2H₂O was dissolved in 500mL of a mixed solvent of water and ethanol (volume ratio 1:1) to obtain a solution containing the Prussian blue analog with a concentration of 0.1 mol/L;
   (2.2) 0.19 g of sodium borohydride (a molar ratio of which to the Prussian blue analog was 0.1:1) was added into the solution obtained in step 2.1 at 25°C, stirred for 1 hour, filtered, and dried under vacuum at 150°C for 10 hours to obtain a positive electrode active material.

The different condition parameters and product parameters for preparing the positive electrode active material were shown in Table 1.

### Examples 2-5

The steps of preparing Example 1 were repeated, with a difference that in step 2.2, the amount of sodium borohydride were changed, see Table 1.

### Example 6: Potassium ion

1. Provision of a Prussian blue analog
   (1.1) Potassium ferrocyanide K₄Fe(CN)₆·10H₂O (an aqueous solution with a concentration of 0.4 mol/L), a cyanide of transition metal M', was mixed with FeSO₄, a compound containing transition metal M, according to a stoichiometric ratio of 1:1, then heated and stirred at 80°C for 5 hours to obtain a suspended aqueous solution of a Prussian blue analog; after lowered to room temperature, it was washed with deionized water for 3 times, and then filtered and dried to obtain a Prussian blue analog having a chemical formula of K₂FeFe(CN)₆·2H₂O.
2. Preparation of a positive electrode active material
   (2.1) 19.1g of the Prussian blue analog having the chemical formula of K₂FeFe(CN)₆·2H₂O was dissolved in 500 mL of a mixed solvent of water and ethanol (volume ratio 1:1) to obtain a solution containing the Prussian blue analog with a concentration of 0.1 mol/L;
   (2.2) 1.35g of potassium borohydride (a molar ratio of which to the Prussian blue analog was 0.5:1) was added into the solution obtained in step 2.1 at 25°C, stirred for 1 hour, filtered, and dried under vacuum at 150°C for 10 hours to obtain a positive electrode active material.

The different condition parameters and product parameters for preparing the positive electrode active material were shown in Table 1.

### Example 7

Compared with Example 1, the difference was that the boron-containing compound and Prussian blue analog were different, see Table 1.

### Example 8: magnesium ion

1. Provision of a Prussian blue analog
   (1.1) Magnesium ferrocyanide Mg₄Fe(CN)₆·10H₂O (an aqueous solution with a concentration of 0.4 mol/L), a cyanide of transition metal M', was mixed with FeSO₄, a compound containing transition metal M, according to a stoichiometric ratio of 1:1, then heated and stirred at 80°C for 5 hours to obtain a suspended aqueous solution of a Prussian blue analog; after lowered to room temperature, it was washed with deionized water for 3 times, and then filtered and dried to obtain a Prussian blue analog having a chemical formula of MgFeFe(CN)₆·2H₂O.
2. Preparation a positive electrode active material
   (2.1) 17.6 g of the Prussian blue analog having the chemical formula of MgFeFe(CN)₆·2H₂O was dissolved in 500 mL of a mixed solvent of water and ethanol (volume ratio 1:1) to obtain a solution containing the Prussian blue analog with a concentration of 0.1 mol/L;
   (2.2) 0.675 g of magnesium borohydride (a molar ratio of which to the Prussian blue analog was 0.25:1) was added into the solution obtained in step 2.1 at 25°C, stirred for 1 hour, filtered, and dried under vacuum at 150°C for 10 hours to obtain a positive electrode active material.

The different condition parameters and product parameters for preparing the positive electrode active material were shown in Table 1.

### Examples 9-11

The steps of preparing Example 1 were repeated, with a difference that in step 2.2, sodium borohydride were added at -10°C, 10°C, and 30°C respectively.

### Examples 12-14

The steps of preparing Example 1 were repeated, with a difference that in step 2.1, the volume ratio of water to ethanol were adjusted to 0.5:1, 2:1, and 3:1 respectively.

### Examples 15-16

The steps of preparing Example 1 were repeated, with a difference that in step 2.2, the time of the stirring were 0.5 hours and 1.5 hours respectively.

### Comparative Example 1

Sodium ferrocyanide Na₄Fe(CN)₆·10H₂O (an aqueous solution with a concentration of 0.4mol/L), a cyanide of transition metal M', was mixed with FeSO₄, a compound containing transition metal M, according to a stoichiometric ratio of 1:1, then heated and stirred at 80°C for 5 hours to obtain a suspended aqueous solution of a Prussian blue analog; after lowered to room temperature, it was washed with deionized water for 3 times, and then filtered and dried to obtain a Prussian blue analog having a chemical formula of Na₂FeFe(CN)₆·2H₂O.

The main preparation conditions and product parameters of each Example and Comparative Example were detailed in Table 1.

**Table 1 Main preparation conditions and product parameters of each Example and Comparative Example**

| Groups | Boron-contai ning compound | Prussian blue analog | Molar ratio (borohydride:Pr ussian blue analog) | Mass percenta ge of B element | Mass percenta ge of carbon element | Molar ratio of B:M | Dᵥ₅₀ (µm) |
|---|---|---|---|---|---|---|---|
| Comparat ive Example 1 | None | Na₂FeFe(CN)₆· 2H₂O | / | 0 | 23.03% | / | 2.3 |
| Example 1 | NaBH₄ | Na₂FeFe(CN)₆· 2H₂O | 0.1:1 | 2.08% | 21.02% | 0.1:1 | 2.5 |
| Example 2 | NaBH₄ | Na₂FeFe(CN)₆· 2H₂O | 0.3:1 | 6.02% | 15.97% | 0.3:1 | 2.2 |
| Example 3 | NaBH₄ | Na₂FeFe(CN)₆· 2H₂O | 0.5:1 | 10.50% | 12.06% | 0.5:1 | 2.7 |
| Example 4 | NaBH₄ | Na₂FeFe(CN)₆·2H₂O | 0.75:1 | 15.25% | 6.29% | 0.75:1 | 2.2 |
| Example 5 | NaBH₄ | Na₂FeFe(CN)₆· 2H₂O | 0.9:1 | 19.38% | 2.65% | 0.9:1 | 2.1 |
| Example 6 | KBH₄ | K₂FeFe(CN)₆·2 H₂O | 0.5:1 | 9.50% | 10.49% | 0.5:1 | 2.9 |
| Example 7 | LiBH₄ | Li₂FeFe(CN)₆·2 H₂O | 0.5:1 | 11.59% | 12.96% | 0.5:1 | 3.1 |
| Example 8 | Mg(BH₄)₂ | MgFeFe(CN)₆· 2H₂O | 0.25:1 | 10.96% | 12.95% | 0.25:1 | 2.7 |
| Example 9 | NaBH₄ | Na₂FeFe(CN)₆· 2H₂O | 0.5:1 | 2.07% | 20.71% | 0.5:1 | 3.1 |
| Example 10 | NaBH₄ | Na₂FeFe(CN)₆· 2H₂O | 0.5:1 | 4.12% | 18.57% | 0.5:1 | 2.9 |
| Example 11 | NaBH₄ | Na₂FeFe(CN)₆· 2H₂O | 0.5:1 | 9.25% | 13.07% | 0.5:1 | 2.7 |
| Example 12 | NaBH₄ | Na₂FeFe(CN)₆· 2H₂O | 0.5:1 | 12.48% | 9.06% | 0.5:1 | 3 |
| Example 13 | NaBH₄ | Na₂FeFe(CN)₆· 2H₂O | 0.5:1 | 6.15% | 15.86% | 0.5:1 | 2.5 |
| Example 14 | NaBH₄ | Na₂FeFe(CN)₆· 2H₂O | 0.5:1 | 1.98% | 21.13% | 0.5:1 | 2.9 |
| Example 15 | NaBH₄ | Na₂FeFe(CN)₆· 2H₂O | 0.5:1 | 8.34% | 13.90% | 0.5:1 | 2.7 |
| Example 16 | NaBH₄ | Na₂FeFe(CN)₆· 2H₂O | 0.5:1 | 8.25% | 13.99% | 0.5:1 | 2.6 |

### II. Application Examples

### Example 1

### 1) Preparation of the positive electrode sheet

The positive electrode active material, the conductive carbon black SP, and the binder PVDF of preparation Example 1 were dispersed into the solvent N-methyl pyrrolidone (NMP) according to a weight ratio of 90:10:10 and mixed evenly to obtain the positive electrode slurry; the positive electrode slurry was coated evenly on the positive electrode current collector aluminum foil, and the positive electrode sheet was obtained after drying and cold pressing. The coating amount per unit area was 0.27 g/1540.25 mm².

### 2) Preparation of the negative electrode sheet

The negative elctrode active material hard carbon, the conductive agent carbon black, the binder styrene butadiene rubber (SBR), and the thickener carboxymethylcellulose sodium (CMC) were dissolved in the solvent deionized water according to a weight ratio of 97.2:0.8:0.8: 1.2, and the negative electrode slurry was obtained under the action of the vacuum stirrer; the negative electrode slurry was coated evenly on the copper foil; dried the copper foil at room temperature and then transferred to an oven for drying at 120 °C for 1 hour. Then the negative electrode sheet was obtained after cool pressing and slitting, and a coating amount per unit area thereof was 0.17g/1540.25mm².

### 3) Separator

A thickness of 12 µm glass fiber separator with 50% porosity was selected.

### 4) Preparation of the electrolyte solution

The organic solvent was a mixed solution containing ethylene carbonate (EC) and ethyl methyl carbonate (EMC), in which a volume ratio of EC/EMC was 3:7. In an argon atmosphere glove box (H₂O<0.1 ppm, O₂<0.1 ppm), 12.5% of sufficiently dried NaPF₆ was dissolved in an organic solvent and mixed evenly to obtain an electrolyte solution. The concentration of lithium salt was 1 mol/L.

### 5) Preparation of the battery

The positive electrode sheet, the separator, and the negative electrode sheet was stacked in order, allowing the separator being between the positive electrode sheet and the negative electrode sheet to play a role of separating, it was rolled into a square bare electric core, and loaded into the aluminum-plastic film, baked at 80 °C to remove water, 10g of the corresponding non-aqueous electrolyte solution was injected, the aluminum-plastic film was sealed, and then after standing, hot and cold pressing, chemical formation, clamping, volume separation and other processes, a finished battery with a capacity of 4000mAh was obtained.

### Examples 2-16 and Comparative Example 1

The preparation method of the secondary battery was similar to that of the secondary battery of Example 1, but the positive electrode active materials of the corresponding preparation Examples were used.

### III. Test on cycle performance of the battery

The battery corresponding to Example 1 was charged at a constant current of 1C to a voltage of 4.0V and then charged at a constant voltage of 4.0V to a current of 0.05C at 25°C, stood for 5 minutes and then discharged at 1C to a voltage of 1.5V The obtained capacity was recorded as an initial capacity C₀. For the same battery above, the above steps were repeated, and the discharge capacity Cn of the battery after the nth cycle was recorded at the same time. The capacity retention of the battery after each cycle was Pn = Cn/C₀ × 100%. Taking P1, P2 ... P400 the 400 point values as vertical coordinate, and the corresponding number of cycle as horizontal coordinate, a graph of capacity retention and number of cycle of the battery corresponding to the positive electrode active material of preparation Example 1 was obtained as shown in FIG. 1.

During this test, the first cycle corresponds to n=1, the second cycle corresponds to n=2, ... the 400th cycle corresponds to n=400. The capacity retention of the battery corresponding to Example 1 in Table 2 was the data measured after 400 cycles under the above test conditions, that is, the value of P400. The testing procedures of Comparative Example 1 and other Examples were the same as above.

The batteries of each Example and Comparative Example were prepared separately according to the above method, and the cycle performance parameters were measured. The results were shown in Table 2 below.

**Table 2 Cycle performance of batteries of each Example and Comparative Example**

| Example number | Cycle performance P400 |
|---|---|
| Comparative Example 1 | 80.0% |
| Example 1 | 93.5% |
| Example 2 | 97.2% |
| Example 3 | 99.6% |
| Example 4 | 95.3% |
| Example 5 | 84.5% |
| Example 6 | 89.0% |
| Example 7 | 98.2% |
| Example 8 | 83% |
| Example 9 | 93.6% |
| Example 10 | 95.7% |
| Example 11 | 99.1% |
| Example 12 | 98.2% |
| Example 13 | 97.9% |
| Example 14 | 91.2% |
| Example 15 | 98.9% |
| Example 16 | 98.2% |

As can be learned from the above Examples and Comparative Examples, the positive electrode active material of the present disclosure is structurally stabilized by doping with boron when the content of boron reaches the range of the present disclosure, resulting in a high level of capacity retention of the corresponding batteries after cycling for 400 cycles, for example up to 99.6%.

It should be noted that the present disclosure is not limited to the above-mentioned embodiments. The above embodiments are merely illustrative, and embodiments having substantially the same composition as that of technical ideas and playing the same effect in the range of the technical solution of the present disclosure all included in the technical scope of the present disclosure. In addition, without departing from the spirit of the present disclosure, various modifications which are applied to the embodiments and can be conceived of by those skilled in the art, and other manners constructed by combining part of the components in the embodiments are also included within the scope of the present disclosure.

## Claims

1. A positive electrode active material, comprising a boron-doped Prussian blue analog;
wherein the Prussian blue analog has a chemical formula of AₐM_{b}M'_{c}(CN)₆·dH₂O, A comprising at least one of an alkali metal cation, an alkaline earth metal cation, Zn²⁺, and Al³⁺, M and M' each independently comprising at least one of Ni ion, Cu ion, Fe ion, Mn ion, Co ion, and Zn ion, and H₂O being coordination water, 0 < a ≤ 2, 0 < b ≤ 1, 0 < c ≤ 1, 0 ≤ d ≤ 2.

2. The positive electrode active material according to claim 1, wherein a content of boron element is 0.001%-20%, optionally 2%-15.5%, based on a weight of the positive electrode active material.

3. The positive electrode active material according to claim 1 or 2, wherein a molar ratio of boron element to M element is (0.001-2): 1, optionally (0.1-0.8): 1, in the positive electrode active material.

4. The positive electrode active material according to any one of claims 1 to 3, wherein a weight ratio of boron element to carbon element is (0.001-800): 1, optionally (0.1-8): 1, in the positive electrode active material.

5. The positive electrode active material according to any one of claims 1 to 4, wherein A comprises at least one of sodium ion, magnesium ion, and potassium ion in the positive electrode active material.

6. The positive electrode active material according to any one of claims 1 to 6, satisfying at least one of the following characteristics:
a specific surface area being 2 m²/g to 5m²/g, optionally 3 m²/g to 4 m²/g; and
an average volume particle diameter Dᵥ₅₀ being 1.5 µm to 5µm, optionally 2µm to 3.5µm.

7. A preparation method of a positive electrode active material, comprising:
(1) adding a Prussian blue analog into a mixed solvent to obtain a solution containing the Prussian blue analog;
(2) adding a boron-containing compound into the solution containing the Prussian blue analog, and mixing to obtain a mixture;
(3) filtering and drying the mixture to obtain a positive active material,
wherein the positive electrode active material comprises a boron-doped Prussian blue analog; and
the Prussian blue analog has a chemical formula of AₐM_{b}M'_{c}(CN)₆·dH₂O, A comprising at least one of an alkali metal cation, an alkaline earth metal cation, Zn²⁺, and Al³⁺, M and M' each independently comprising at least one of Ni ion, Cu ion, Fe ion, Mn ion, Co ion, and Zn ion, and H₂O being coordination water, 0 < a ≤ 2, 0 < b ≤ 1, 0 < c ≤ 1, 0 ≤ d ≤ 2.

8. The method according to claim 7, wherein in step (1), the mixed solvent is a mixture of water and an organic solvent miscible with water.

9. The method according to claim 8, wherein a volume ratio of the water to the organic solvent is (0.001-3): 1.

10. The method according to any one of claims 7 to 9, wherein in step (2), the boron-containing compound has a formula of Q(BH₄)ₓ, Q representing an alkali metal ion, an alkaline earth metal ion, an aluminum ion, and a zinc ion, and x being a valence state of Q.

11. The method according to any one of claims 7 to 10, wherein in step (2), a molar ratio of the boron-containing compound to the Prussian blue analog is (0.5-2):1, optionally (0.5-1):1.

12. The method according to any one of claims 7 to 11, wherein in step (2), a temperature of the mixing is -10°C to 30°C, optionally 0°C to 25°C; and
a time of the mixing is 0 to 2 hours, optionally 0.5 to 1.5 hours.

13. A secondary battery, comprising the positive electrode active material according to any one of claims 1 to 6 or the positive electrode active material prepared by the method according to any one of claims 7 to 12.

14. The secondary battery according to claim 13, wherein the secondary battery is a sodium ion secondary battery.

15. An electrical device, comprising the secondary battery according to any one of claims 13 to 14.
